# DEMANDE DE BREVET EUROPEEN

(11) **EP 0 714 076 A1**
(43) Date de publication de la demande: **29.05.1996**
(21) Numéro de dépôt: 95402568.0
(22) Date de dépôt: 15.11.1995
(51) Int. Cl.: G06K 19/077

(54) **Objet portatif comprenant un circuit électronique alimenté par pile interne et comportant une mémoire de données, procédé et dispositif d'alimentation externe de cet objet et de transfert de données avec celui-ci**

(30) Priorité: 22.11.1994 FR 9413953
(71) Demandeur: INNOVATRON INDUSTRIES, Société Anonyme, F-75002 Paris (FR)
(72) Inventeur: Mardinian, Grégory, F-95160 Montmorency (FR); Brice, Patrice, F-94300 Vincennes (FR)
(74) Mandataire: Dupuis-Latour, Dominique

(57) **Abrégé**

L'objet portatif (1) comprend un circuit électronique alimenté par une pile interne et comportant une mémoire de données ; il permet notamment la transmission sans contact d'informations avec l'extérieur.

Il comprend une zone transperçable (2) formant une région du boîtier de l'objet et, à l'intérieur du boîtier et au droit de cette zone transperçable, une pluralité de plages de contact (P1, P2) reliées à des lignes d'alimentation du circuit électronique, ces plages étant susceptibles d'être mises en contact avec des pointes électriquement conductrices (T1, T2) reliées à un circuit externe d'alimentation et enfoncées au travers de la zone transperçable, de manière à alimenter le circuit électronique de l'objet en suppléant ainsi à un épuisement ou une défaillance de la pile interne, notamment pour permettre un accès à la mémoire de données.

## Description

L'invention concerne un objet portatif alimenté par une pile interne et comportant une mémoire de données.

Elle a pour but de rendre cet objet alimentable de l'extérieur, notamment pour permettre un accès à la mémoire de données en cas d'épuisement ou de défaillance de la pile interne. L'invention vise également un procédé et un dispositif pour réaliser l'alimentation externe d'un tel objet.

Un objet de ce type est en particulier (mais de façon non limitative) un objet du type "carte sans contact" ou "badge sans contact", c'est-à-dire un objet portatif susceptible d'échanger des informations (par lecture, et éventuellement écriture, de la mémoire de données de l'objet) avec un lecteur externe en approchant l'objet de celui-ci de manière à permettre un couplage électromagnétique, non galvanique. L'échange d'informations se fait alors par voie radioélectrique ou en faisant varier un champ magnétique produit par une bobine d'induction.

L'invention vise le cas des objets alimentés par une pile interne, tout particulièrement lorsque ces objets sont jetables, donc sans possibilité d'accès physique à la pile par ouverture du boîtier ou d'une trappe.

Lorsque la pile arrive en fin de vie ou présente une défaillance, le circuit électronique de l'objet détecte la chute de tension, avertit l'utilisateur de la fin de vie prochaine par une indication visuelle ou sonore, puis désactive le circuit électronique pour empêcher que celui-ci ne réalise des opérations incorrectes du fait d'une tension insuffisante.

Les données de la mémoire sont cependant conservées et sont donc intactes, bien que devenues inaccessibles puisque, du fait de l'épuisement de la pile, l'objet n'est plus capable de communiquer avec le lecteur extérieur - à la différence, par exemple, des badges non alimentés, qui reçoivent du lecteur leur énergie de fonctionnement et fonctionnent donc en répondeurs purement passifs. La conservation des données dans cette situation peut résulter soit de l'utilisation d'une mémoire par nature non volatile, soit, plus fréquemment, du passage à un mode de fonctionnement "dégradé" dans lequel, la fin de vie prochaine de la pile ayant été détectée, l'énergie subsistante est réservée à la sauvegarde des données de la mémoire, en interdisant toute communication avec l'extérieur, qui serait une étape consommant une quantité d'énergie excessive et mettrait en péril l'intégrité des données de la mémoire.

Comme exemple de tels objets portatifs, on trouve les badges utilisés pour le télépéage, notamment le télépéage de transports urbains tels que métro ou autobus.

La mémoire de données y est chargée d'un certain nombre d'informations, par exemple d'un certain nombre d'unités décrémentables correspondant à la valeur d'un ticket ou d'une unité monétaire, ou bien d'informations relatives à des abonnements hebdomadaires, mensuels ou annuels.

On comprendra que, en fin de vie de la pile, il subsiste dans la mémoire de données des informations importantes qu'il est nécessaire de récupérer afin de pouvoir restaurer les droits de l'utilisateur dans leur état initial, par exemple par transfert de ces informations vers un badge neuf.

Il est certes possible de prévoir un badge démontable, dans lequel, après ouverture, la pile peut être changée. Cette opération est cependant toujours délicate compte tenu de la miniaturisation très poussée des circuits, et il s'est avéré préférable de réaliser ce type de badge sous forme d'un objet à durée de vie longue (typiquement plusieurs années), avec un boîtier scellé, jetable lorsque la pile est épuisée.

L'invention vise le problème particulier consistant à récupérer les données contenues dans de tels objets en les alimentant de l'extérieur le temps nécessaire pour rétablir une possibilité d'accès à la mémoire de données, sans qu'il soit nécessaire d'ouvrir le boîtier (ce qui en pratique peut être impossible, comme dans le cas d'un boîtier scellé).

On verra que cette alimentation externe est réalisée par voie galvanique, ce qui évite le recours à des circuits complexes d'alimentation par transmission d'énergie radioélectrique ou magnétique, circuits qui entraîneraient un surcroît de complexité susceptible de grever le coût de l'objet, que l'on souhaite pouvoir réaliser en très grande série et à bas coût (surtout s'il s'agit d'un objet jetable).

À cet effet, l'invention propose un objet portatif du type précité, c'est-à-dire comprenant un circuit électronique alimenté par une pile interne et comportant une mémoire de données, notamment du type permettant la transmission sans contact d'informations avec l'extérieur, objet caractérisé en ce qu'il comprend une zone transperçable formant une région du boîtier de l'objet et, à l'intérieur du boîtier et au droit de cette zone transperçable, une pluralité de plages de contact reliées à des lignes d'alimentation du circuit électronique, ces plages étant susceptibles d'être mises en contact avec des pointes électriquement conductrices reliées à un circuit externe d'alimentation et enfoncées au travers de la zone transperçable, de manière à alimenter le circuit électronique de l'objet en suppléant ainsi à un épuisement ou une défaillance de la pile interne, notamment pour permettre un accès à ladite mémoire de données.

La pluralité de plages comprend notamment deux plages situées sur une même ligne d'alimentation et séparées par un élément conducteur destructible, de manière à isoler, après destruction de cet élément, la pile interne épuisée ou défaillante d'avec le circuit électronique ; l'élément conducteur destructible est de préférence un élément fusible, destructible par passage d'un courant d'intensité sensiblement supérieure à l'intensité nominale de fonctionnement du circuit électronique.

La zone transperçable est avantageusement la face d'appui en matériau souple d'un bouton-poussoir.

L'invention a également pour objet un procédé pour alimenter de l'extérieur un objet portatif tel que ci-dessus, procédé caractérisé par les étapes consistant à : enfoncer au travers de la zone transperçable la pluralité de pointes électriquement conductrices jusqu'à ce que ces pointes viennent en contact avec la pluralité de plages de contact de l'objet ; puis appliquer entre les pointes une tension de manière à alimenter le circuit électronique.

Lorsque la pluralité de plages de l'objet comprend deux plages situées sur une même ligne d'alimentation et séparées par un élément conducteur destructible, il est alors prévu avant application de la tension d'alimentation une étape consistant à détruire l'élément destructible, étape avantageusement opérée en faisant passer dans l'élément destructible, par les pointes en contact avec lesdites plages situées sur une même ligne d'alimentation, un courant d'intensité sensiblement supérieure à l'intensité nominale de fonctionnement du circuit électronique. Dans ce dernier cas, il peut être prévu une étape consistant à mesurer avant destruction de l'élément destructible la tension aux bornes de la pile interne et à appliquer par les pointes une tension de même valeur entre ces bornes, cette tension étant maintenue au moins pendant toute la durée du passage du courant de destruction.

L'invention couvre également un dispositif d'alimentation externe et de transfert de données destiné à coopérer avec un objet portatif tel que ci-dessus, dispositif caractérisé en ce qu'il comprend : une pluralité de pointes électriquement conductrices ; des moyens pour enfoncer ces pointes au travers d'une zone transperçable formant une région du boîtier de l'objet jusqu'à ce que les pointes viennent en contact avec une pluralité correspondante de plages de contact de l'objet reliées à des lignes d'alimentation du circuit électronique ; des moyens pour appliquer entre les pointes une tension d'alimentation ; et des moyens pour accéder à ladite mémoire de données.

Il est avantageusement prévu en outre des moyens pour appliquer, entre des pointes en contact avec des plages de l'objet situées sur une même ligne d'alimentation, un courant de destruction d'un élément destructible de l'objet ; dans ce cas, il peut être en outre prévu des moyens pour mesurer avant destruction de l'élément destructible la tension aux bornes de la pile interne et des moyens pour appliquer par les pointes une tension de même valeur entre ces bornes, et maintenir cette tension au moins pendant toute la durée d'activation des moyens pour appliquer ledit courant de destruction.

D'autres caractéristiques et avantages de l'invention apparaîtront à la lecture de la description ci-dessous d'un exemple de réalisation, faite en référence aux dessins annexés.

La figure 1 est une vue de face d'un exemple d'objet portatif auquel peuvent être appliqués les enseignements de l'invention.

La figure 2 est une vue de face de la carte de circuit à l'intérieur de cet objet, montrant les différentes pistes et plages conductrices.

La figure 3 est une vue agrandie du circuit de la figure 2, à l'endroit du bouton-poussoir.

La figure 4 est une coupe à échelle agrandie de l'objet portatif, prise selon IV-IV de la figure 1 au droit du bouton-poussoir, montrant la manière dont est établi le contact entre les pointes du dispositif et les plages conductrices du circuit de l'objet.

La figure 5 est un dessin schématique de l'objet et du dispositif d'alimentation externe, montrant la manière dont dispositif et objet coopèrent.

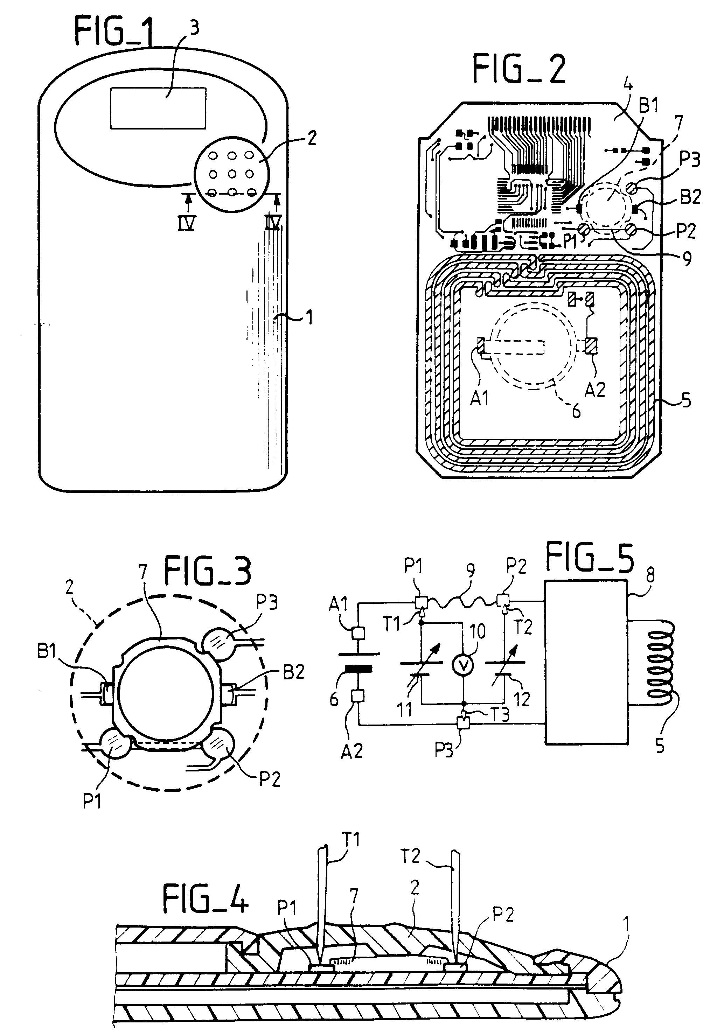

La figure 1 représente un objet portatif du type "badge" tel qu'utilisé par exemple pour le télépéage des transports en commun. Extérieurement, ce badge 1 comporte simplement un bouton-poussoir 2 et un afficheur 3.

Le badge contient à l'intérieur un circuit électronique, réalisé sur une carte 4 représentée figure 2. Sur cette figure, on n'a représenté que les pistes conductrices, sans les composants, qui sont par exemple montés sur cette carte en technologie CMS et éventuellement en technologie de pastillage (technologie dite également COB, *Chip-On-Board).*

Le circuit électronique comporte, de façon en elle-même connue, une mémoire de données, typiquement une mémoire de type RAM sauvegardée (ou, en variante, une mémoire non volatile de type EPROM ou analogue), un circuit processeur et un circuit analogique permettant la transmission d'informations sans contact avec l'extérieur, par exemple par couplage inductif avec un lecteur à faible distance du badge ; on voit sur la figure 2 la bobine 5 permettant de réaliser ce couplage inductif.

L'objet portatif est alimenté par une pile interne 6, montée sur le circuit entre deux bornes A1 et A2. L'énergie fournie par cette pile permet d'assurer le traitement interne des données, la gestion de l'accès à la mémoire, l'échange d'informations avec le lecteur externe et la sauvegarde des données.

L'utilisation du badge s'effectue de façon très simple, en l'approchant d'un lecteur. La liaison sans fil est alors établie entre badge et lecteur. Le lecteur procède alors à une authentification et une reconnaissance du badge et, en cas de conformité, exécute l'action correspondante, par exemple le déblocage d'un tourniquet ou d'un portillon d'accès, avec éventuellement décrémentation d'une unité de compte dans la mémoire du badge (s'il s'agit d'un abonnement, les informations correspondantes ne sont bien entendu pas modifiées).

Le bouton-poussoir 2 a pour seule fonction de commander l'afficheur 3 afin de permettre à l'utilisateur de connaître les informations conservées en mémoire (limite de validité, nombre d'unités subsistantes, état de la pile, etc.), avec par exemple affichage successif des diverses informations à chaque appui sur le bouton-poussoir 2.

On notera que le badge ne comporte aucune autre commande, l'accès à la mémoire étant entièrement piloté par le lecteur externe une fois la liaison établie avec le badge.

Le badge est avantageusement réalisé sous forme d'un boîtier entièrement scellé ou surmoulé, ce qui permet d'en réduire encore le coût et d'éviter tout risque de fraude par manipulation de la mémoire après démontage de l'appareil.

Le badge ne comporte non plus aucun contact galvanique externe, puisqu'il possède sa propre alimentation et que la transmission d'informations est réalisée par une technique du type "sans contact".

Lorsque la tension de la pile tombe en dessous d'un certain seuil, indiquant une fin de vie prochaine de celle-ci (typiquement, au bout de quelques années), le processeur du circuit se bloque afin d'éviter toute opération erronée susceptible d'altérer de façon incorrecte le contenu de la mémoire de données, et l'énergie subsistante de la pile est alors réservée à la seule sauvegarde de ces données (mode "dégradé").

Le contenu de cette mémoire est donc préservé et il est nécessaire de pouvoir le relire afin, par exemple, de charger un nouveau badge avec le nombre d'unités subsistantes, les droits d'abonnement, etc.

Grâce à l'invention, cette opération peut être réalisée sans démontage du boîtier et sans adjonction de composants (ce qui aurait été le cas si l'on avait voulu permettre la transmission d'énergie sans contact par voie inductive).

A cet effet, on prévoit, avantageusement, dans la région du bouton-poussoir 2, de former sur le circuit imprimé 4 des plages de contact P1, P2, P3 reliées à des lignes d'alimentation du circuit électronique.

Ces plages sont situées à proximité du bouton-poussoir 2 car, la face externe de celui-ci étant réalisée en un matériau souple (élastomère ou analogue) il sera aisé de transpercer ce matériau au moyen d'une pointe fine pour venir accéder galvaniquement aux plages P1, P2, P3.

Comme on peut le voir sur la figure 2 et sur la vue agrandie de la figure 3, les plages P1, P2, P3 sont par exemple situées à la périphérie du microcontact 7 commandé par le bouton-poussoir (et relié aux plages B1 et B2), afin de se situer toujours sous le poussoir 2 en matériau souple (voir également la coupe de la figure 4).

La figure 5 représente schématiquement la configuration électrique de ces divers éléments : la pile 6, reliée aux plages A1 et A2, alimente le circuit électronique du badge, schématisé par le bloc 8.

Les plages de contact P1 et P2 sont situées sur une première des lignes d'alimentation, un élément conducteur destructible 9 étant monté entre ces deux plages P1 et P2.

L'élément conducteur destructible 9, ci-après appelé "fusible", se comporte comme un conducteur normal pour l'intensité nominale de fonctionnement du circuit électronique, et peut être détruit par échauffement en y faisant passer un courant d'intensité sensiblement supérieure à cette intensité nominale, de la manière que l'on décrira plus loin. Ce fusible 9 peut être par exemple, comme illustré sur les figures 2 et 3, une piste imprimée étroite, calibrée de manière appropriée ; il peut également s'agir, si l'on utilise une technique de montage par pastillage, d'un fil de *bonding,* c'est-à-dire d'un fil conducteur, par exemple en aluminium, de quelques micromètres de diamètre servant à établir les connexions entre les plages de contact d'une puce et les plages de contact du circuit sur lequel cette puce est directement montée.

La plage P3 est située sur l'autre ligne d'alimentation, c'est-à-dire celle sur laquelle ne sont pas situées les plages P1 et P2.

Le dispositif permettant d'alimenter de l'extérieur le badge et d'en récupérer les données (appelé simplement "dispositif' partout dans cette description) comporte une pluralité de pointes électriquement conductrices, en nombre égal à celui des plages de contact P1, P2, P3 du badge.

Ces pointes T1, T2 et T3 sont schématisées sur la figure 5, en contact avec les plages conductrices P1, P2 et P3, respectivement.

Sur la figure 4, on peut voir l'aspect des pointes T1 et T2, qui ont été enfoncées par un moyen approprié (par exemple un support monté sur un levier) au travers du matériau transperçable (élastomère par exemple) du bouton-poussoir 2, jusqu'à venir en contact galvanique avec les plages de contact homologues P1 et P2 du badge. De préférence, pendant tout le déroulement des étapes que l'on va décrire ci-après, on maintient une pression d'appui suffisante des pointes sur les plages de contact, par exemple par un système à ressort, afin de réaliser une liaison franche et présentant une faible résistance de contact.

Le dispositif comporte en outre un voltmètre 10, monté entre les pointes T1 et T3, une première source de tension réglable 11, montée également entre les pointes T1 et T3, et une seconde source de tension réglable 12, montée entre les pointes T2 et T3.

Ce dispositif est mis en oeuvre de la manière suivante.

Tout d'abord, on établit le contact entre les pointes du dispositif et les plages homologues du badge en enfonçant ces pointes au travers du matériau du bouton-poussoir 2, les sources 11 et 12 étant déconnectées ou neutralisées de toute autre manière.

Au moyen du voltmètre 10, on mesure ensuite la tension résiduelle de la pile 6, prise entre les plages P1 et P3.

On règle ensuite les deux sources 11 et 12 à une valeur égale à la tension ainsi mesurée.

Puis on augmente progressivement la tension de la source 12, ce qui va avoir pour conséquence l'établissement d'un courant circulant dans la boucle constituée par la source 12, l'élément fusible 9 et la source 11 (dont l'impédance interne est bien plus faible que celle de la pile usée 6).

En augmentant progressivement la tension de la source 12, le courant dans la boucle augmente corrélativement, jusqu'à provoquer la destruction du fusible 9. On notera que, pendant cette étape, il ne circule pas de courant dans la pile 6, ce qui évite tout risque d'explosion du fait d'un effet de charge sous courant inverse.

Une fois le fusible 9 détruit, la pile 6 est entièrement déconnectée du circuit électronique 8, et l'on peut alors alimenter en toute sécurité celui-ci à sa tension nominale de fonctionnement en réglant la source 12 à cette valeur de tension.

Le badge peut alors être interrogé par un lecteur de type classique et selon un protocole classique afin d'en lire et d'en récupérer les données contenues dans la mémoire.

On peut souligner que la procédure que l'on vient de décrire permet de déconnecter la pile sans discontinuité d'alimentation du circuit électronique du badge, ce qui peut être notamment avantageux lorsque, malgré sa baisse de tension, la pile continue à jouer un rôle fonctionnel limité (fonctionnement en mode "dégradé").

## Revendications

1. Un objet portatif (1) comprenant un circuit électronique (8) alimenté par une pile interne (6) et comportant une mémoire de données, notamment du type permettant la transmission sans contact d'informations avec l'extérieur, objet caractérisé en ce qu'il comprend une zone transperçable (2) formant une région du boîtier de l'objet et, à l'intérieur du boîtier et au droit de cette zone transperçable, une pluralité de plages de contact (P1, P2, P3) reliées à des lignes d'alimentation du circuit électronique, ces plages étant susceptibles d'être mises en contact avec des pointes électriquement conductrices (T1, T2, T3) reliées à un circuit externe d'alimentation (10, 11, 12) et enfoncées au travers de la zone transperçable, de manière à alimenter le circuit électronique de l'objet en suppléant ainsi à un épuisement ou une défaillance de la pile interne, notamment pour permettre un accès à ladite mémoire de données.

2. L'objet portatif de la revendication 1, dans lequel la pluralité de plages comprend deux plages (P1, P2) situées sur une même ligne d'alimentation et séparées par un élément conducteur destructible (9), de manière à isoler, après destruction de cet élément, la pile interne épuisée ou défaillante d'avec le circuit électronique.

3. L'objet portatif de la revendication 2, dans lequel l'élément conducteur destructible (9) est un élément fusible, destructible par passage d'un courant d'intensité sensiblement supérieure à l'intensité nominale de fonctionnement du circuit électronique.

4. L'objet portatif de la revendication 1, dans lequel la zone transperçable (2) est la face d'appui en matériau souple d'un bouton-poussoir.

5. Un procédé pour alimenter de l'extérieur un objet portatif comprenant un circuit électronique alimenté par une pile interne et comportant une mémoire de données, notamment du type permettant la transmission sans contact d'informations avec l'extérieur, cet objet comprenant une zone transperçable formant une région du boîtier de l'objet, procédé caractérisé par les étapes consistant à : enfoncer au travers de la zone transperçable une pluralité de pointes électriquement conductrices jusqu'à ce que ces pointes viennent en contact avec une pluralité correspondante de plages de contact de l'objet reliées à des lignes d'alimentation du circuit électronique ; puis appliquer entre les pointes une tension de manière à alimenter le circuit électronique en suppléant ainsi à un épuisement ou une défaillance de la pile interne, notamment pour permettre un accès à ladite mémoire de données.

6. Le procédé de la revendication 5, dans lequel, la pluralité de plages de l'objet comprenant deux plages situées sur une même ligne d'alimentation et séparées par un élément conducteur destructible, il est prévu avant application de la tension d'alimentation une étape consistant à détruire l'élément destructible, de manière à isoler la pile interne épuisée ou défaillante d'avec le circuit électronique.

7. Le procédé de la revendication 6, dans lequel l'étape de destruction est opérée en faisant passer dans l'élément destructible, par les pointes en contact avec lesdites plages situées sur une même ligne d'alimentation, un courant d'intensité sensiblement supérieure à l'intensité nominale de fonctionnement du circuit électronique.

8. Le procédé de la revendication 7, dans lequel il est prévu une étape consistant à mesurer avant destruction de l'élément destructible la tension aux bornes de la pile interne et à appliquer par les pointes une tension de même valeur entre ces bornes, cette tension étant maintenue au moins pendant toute la durée du passage du courant de destruction.

9. Un dispositif d'alimentation externe et de transfert de données destiné à coopérer avec un objet portatif comprenant un circuit électronique alimenté par une pile interne et comportant une mémoire de données, notamment du type permettant la transmission sans contact d'informations avec l'extérieur, dispositif caractérisé en ce qu'il comprend :
- une pluralité de pointes (T1, T2, T3) électriquement conductrices,
- des moyens pour enfoncer ces pointes au travers d'une zone transperçable formant une région du boîtier de l'objet jusqu'à ce que les pointes viennent en contact avec une pluralité correspondante de plages de contact de l'objet reliées à des lignes d'alimentation du circuit électronique,
- des moyens (12) pour appliquer entre les pointes une tension d'alimentation, et
- des moyens pour accéder à ladite mémoire de données.

10. Le dispositif de la revendication 9, comprenant en outre des moyens (11, 12) pour appliquer, entre des pointes en contact avec des plages de l'objet situées sur une même ligne d'alimentation, un courant de destruction d'un élément destructible de l'objet.

11. Le dispositif de la revendication 10, comprenant en outre des moyens (10) pour mesurer avant destruction de l'élément destructible la tension aux bornes de la pile interne et des moyens (11) pour appliquer par les pointes une tension de même valeur entre ces bornes, et maintenir cette tension au moins pendant toute la durée d'activation des moyens pour appliquer ledit courant de destruction.
